# EUROPÄISCHE PATENTSCHRIFT

(11) **EP 2 921 364 B1**
(45) Veröffentlichungstag und Bekanntmachung des Hinweises auf die Patenterteilung: **01.01.2020**
(21) Anmeldenummer: 15000449.7
(22) Anmeldetag: 14.02.2015
(51) Int. Cl.: B60W 50/14, G08G 1/16

(54) **Verfahren und Vorrichtung sowie Fahrzeug zum Verhindern der Ausgabe von Kollisionswarnungen und/oder Abstandswarnungen während eines Abschleppvorgangs**
Method and device and vehicle for preventing the output of collision warnings and/or distance warnings during a towing procedure
Dispositif, procédé et véhicule destinés à empêcher l'émission d'avertissements de collision et/ou d'avertissements de distance, en particulier pendant un remorquage

(30) Priorität: 12.03.2014 DE 102014003256
(43) Veröffentlichungstag der Anmeldung: 23.09.2015
(73) Patentinhaber: WABCO GmbH, 30453 Hannover (DE)
(72) Erfinder: Baum, Mathias, 30455 Hannover (DE); Deblitz, Michaela, 31275 Lehrte (DE); Kallenbach, Stephan, 30161 Hannover (DE)

(56) Entgegenhaltungen:
- EP-A2- 1 234 739
- US-A1- 2005 068 197
- US-B1- 6 345 224

## Beschreibung

Die Erfindung betrifft ein Verfahren zum Verhindern der Ausgabe von Kollisionswarnungen und/oder Abstandswarnungen sowie eine Vorrichtung zur Verhinderung der Ausgabe von Kollisionswarnungen und/oder Abstandswarnungen und ein Fahrzeug.

Es sind in Kraftfahrzeuge integrierte Systeme bekannt, die Abstandswarnungen- und/oder Kollisionswarnungen für den Fahrer des Kraftfahrzeugs ausgeben. Derartige Abstands- und/oder Kollisionswarnungen werden z.B. dann ausgegeben, wenn sich das Kraftfahrzeug, z.B. aus Unachtsamkeit des Fahrers oder aufgrund komplexer Verkehrssituationen, einem vorausfahrenden Kraftfahrzeug mit einer derartigen Geschwindigkeit nähert, dass die Gefahr eines Unfalls besteht. Abstands- und/oder Kollisionswarnungen werden z.B. als optische, akustische oder haptische Signale im Fahrgastraum ausgegeben.

Derartige Systeme sind als Abstandswarnungs- oder Kollisionswarnungssysteme bekannt und üblicherweise als Teilfunktionen von Abstandsregeltempomaten oder Notbremssystemen realisiert. Bei Abstandsregeltempomaten oder Notbremssystemen eines Kraftfahrzeugs ist als Teil dieser Systeme, insbesondere im Frontbereich des Kraftfahrzeugs, ein Aktor-Sensor-System, z.B. in Form einer Radareinrichtung, integriert. Mit dem Aktor-Sensor-System wird dann insbesondere der Abstand zum vorausfahrenden Kraftfahrzeug gemessen und im Falle eines aufgrund der Geschwindigkeit unfallgefährlichen Abstands bei aktiviertem Abstandsregeltempomat oder aktiviertem Notbremssystem direkt in die Fahrzeugbewegung eingegriffen.

Die US20050068197A1 beschreibt ein Fahrzeug mit einem Anhänger, wobei an dem Fahrzeug bei angekuppeltem Anhänger das rückwärtige Einparkhilfesystem des Fahrzeugs deaktiviert wird.

Die US6345224B1 beschreibt ein Kraftfahrzeug in einem Schleppbetrieb eines Anhängers oder durch ein anderes Kraftfahrzeug. Bei aktiviertem Schleppbetrieb ist ein Kollisionsvermeidungssystem des Kraftfahrzeugs weiterhin aktiv und ermittelt das Vorhandensein eines abschleppenden Kraftfahrzeugs, um bei nicht Vorhandensein automatisch die Bremsen des Kraftfahrzeugs zu betätigen. Wird eine drohende Kollision während des Schleppbetriebs durch das aktive Kollisionsvermeidungssystem des Kraftfahrzeugs erkannt, dann wird durch das Kollisionsvermeidungssystem eine automatische Bremsung durchgeführt.

Die EP1234739A2 beschreibt einen Schleppbetrieb eines Kraftfahrzeuges, das von einem zweiten herkömmlichen Kraftfahrzeug geschleppt wird. Im Schleppbetrieb wird die Steuerung des Bremssystems des abgeschleppten Kraftfahrzeugs durch einen Schalter oder einen automatisch erkannten Schleppbetrieb in einen Ruhezustand versetzt. Sobald über den Fahrzeugdatenbus ein Signal an die Steuerung des Bremssystems übermittelt wird, wird die Steuerung während des Schleppbetriebs geweckt und damit aktiviert und verarbeitet des empfangene Signal Bremsenansteuersignal auf herkömmliche Weise zur Ausführung einer Bremsung des Kraftfahrzeugs. Eine Abstands- oder Kollisionswarnvorrichtung wird nicht offenbart.

Im Gegensatz zu den Abstandsregeltempomaten oder Notbremssystemen selbst sind die Abstandswarnungs- oder Kollisionswarnungssysteme nicht abschaltbar, damit diese nach dem Einschalten des Motors oder der Zündung ab einem vordefinierten Geschwindigkeitswert des Kraftfahrzeugs automatisch aktiviert sind und vor Gefahrensituationen warnen.

Es ergibt sich jedoch ein technisches Problem, wenn Fahrzeuge mit Abstands-und/oder Kollisionswarnungssystemen abgeschleppt werden müssen. Beim Abschleppvorgang muss der Motor üblicherweise laufen, damit das abgeschleppte Kraftfahrzeug gelenkt werden kann. Moderne Fahrzeuge weisen nämlich eine Lenkunterstützung auf, die ein Lenken bei laufendem Motor zwar erleichtert aber bei abgeschaltetem Motor ein Lenken des Kraftfahrzeugs erschwert bzw. sogar gar nicht möglich macht. Wie bereits oben geschildert, wird jedoch gemäß dem Stand der Technik bei laufendem Motor auch das Abstands- und/oder Kollisionswarnungssystem ab einem bestimmten Geschwindigkeitswert aktiviert.

Das Abschleppfahrzeug fährt nun beim Abschleppvorgang üblicherweise in einem Abstand von einigen Zentimetern bis etwa fünf Metern, je nach Abschleppseil- oder Abschleppstangenlänge vor dem abgeschleppten Kraftfahrzeug. Dieser Abstand zwischen dem Abschleppfahrzeug und dem abgeschleppten Kraftfahrzeug führt dazu, dass ständig Kollisionswarnungen und/oder Abstandswarnungen vom abgeschleppten Kraftfahrzeug an dessen Fahrer ausgegeben werden.

Diese Kollisionswarnungen und/oder Abstandswarnungen beeinträchtigen einerseits den Komfort des Fahrers des abgeschleppten Kraftfahrzeugs, können andererseits jedoch sogar dazu führen, dass der Fahrer durch die Kollisionswarnungen und/oder Abstandswarnungen derart abgelenkt ist, dass neue Unfallgefahren entstehen können.

Die Aufgabe der vorliegenden Erfindung ist es daher, einen Abschleppvorgang durch das Kraftfahrzeug mit Abstandswarnungs- oder Kollisionswarnungssystemen automatisch zu erkennen, um die Ausgabe von Kollisionswarnungen und/oder Abstandswarnungen während des Abschleppvorgangs zu verhindern, abzuschalten bzw. zu unterdrücken.

Die Erfindung löst diese Aufgabe durch ein Verfahren zum Verhindern der Ausgabe von Kollisionswarnungen und/oder Abstandswarnungen nach Anspruch 1 sowie eine Vorrichtung zur Verhinderung der Ausgabe von Kollisionswarnungen und/oder Abstandswarnungen nach Anspruch 9 und ein Fahrzeug nach Anspruch 17.

Die Erfindung umfasst dazu einen Überwachungsschritt bzw. Überwachungsmittel Mit dem Überwachungsschritt bzw. den Überwachungsmitteln werden Werte eines oder mehrerer vorbestimmter Fahrzeugparameter erfasst. Die Werte dieser Parameter werden insbesondere durch Sensoren des Kraftfahrzeugs zur Verfügung gestellt, wobei auf diese Werte im Überwachungsschritt bzw. von den Überwachungsmitteln zugegriffen wird.

Parameter des Kraftfahrzeugs sind z.B. die Geschwindigkeit des Kraftfahrzeugs, die Gangwahlschalterstellung, die Motordrehzahl, die Fahrpedalstellung, die mit einer Radareinrichtung aufgenommene Geschwindigkeit eines vorausfahrenden Kraftfahrzeugs sowie dessen Abstand zum Kraftfahrzeug und/oder die Warnblinkeranlageneinstellung. Werte dieser Parameter sind dann z.B. die Werte der Geschwindigkeit des Kraftfahrzeugs, die Werte der Motordrehzahl, die Position der Fahrpedalstellung, Werte der Relativgeschwindigkeit zwischen den Fahrzeugen, die Position der Gangwahlschalterstellung und/oder eine aktivierte oder deaktivierte Warnblinkeranlageneinstellung. Es wird z.B. vordefiniert, für welche Parameter im Überwachungsschritt bzw. von dem Überwachungsmittel die Werte erfasst werden.

In einem Auswerteschritt bzw. mit einem Auswertemittel werden dem Parameter, oder im Falle mehrerer vordefinierter Parameter, jeweils jedem der Fahrzeugparameter entweder eine vermutete Abschleppsituation oder eine normale Vorausfahrt zugeordnet. Diese Zuordnung findet in Abhängigkeit der Werte des bzw. des jeweiligen Parameters statt. Im Falle mehrerer vordefinierter Parameter werden also für jeden Parameter jeweils die Werte des jeweiligen Parameters erfasst und dem jeweiligen Parameter im Falle, dass die Werte des Parameters z.B. vordefinierte Schwellenwerte überschreiten oder unterschreiten, entweder eine vermutete Abschleppsituation oder eine normale Vorausfahrt zugeordnet.

Ferner wird in einem Abschaltschritt bzw. mit Abschaltmitteln die Ausgabe von Kollisionswarnungen mit Kollisionswarnungsausgabemitteln und/oder von Abstandswarnungen mit Abstandswarnungsausgabemitteln dann, z.B. durch Abschalten oder Unterdrücken, verhindert, wenn entweder einem, mehreren oder allen Fahrzeugparametern eine vermutete Abschleppsituation zugeordnet ist.

Für den Abschaltschritt bzw. für die Abschaltmittel wird z.B. vordefiniert, ob es ausreichend ist, dass einem beliebigen der erfassten Parameter eine vermutete Abschleppsituation zugeordnet ist, um die Abstandswarnungen und/oder Kollisionswarnungen abzuschalten. Es ist auch vorstellbar, dass vordefiniert ist, dass mehreren, zumindest einem oder mehreren bestimmten oder allen Parametern eine vermutete Abschleppsituation zugeordnet sein muss, um die Abstandswarnungen und/oder Kollisionswarnungen zu verhindern.

Dank der Erfindung wird somit ein Abschleppvorgang des Kraftfahrzeug mit Abstandswarnungs- oder Kollisionswarnungssystemen durch Erfassen und Auswerten fahrzeugspezifischer Parameter automatisch erkannt, um die Ausgabe von Kollisionswarnungen und/oder Abstandswarnungen während des Abschleppvorgangs, z.B. durch Abschalten der Kollisionswarnungen und/oder Abstandswarnungen, zu verhindern bzw. zu unterdrücken.

Gemäß einer ersten Ausführungsform ist als ein Parameter ein Abstand oder sind als Parameter mehrere Abstände zwischen dem Kraftfahrzeug und einem vorausfahrenden Kraftfahrzeug vordefiniert. Im Überwachungsschritt bzw. mit den Überwachungsmitteln werden die Abstandswerte des bzw. der Abstände erfasst. Die Werte werden z.B. mit einer Radareinrichtung des Kraftfahrzeugs erfasst. Im Auswerteschritt bzw. mit den Auswertemitteln wird dem Abstand bzw. jeweils jedem der Abstände eine vermutete Abschleppsituation zugeordnet, wenn der bzw. die Abstände innerhalb eines vordefinierten Abstandsbereiches liegen und die zeitliche Änderung der erfassten Abstandswerte innerhalb mindestens eines vordefinierten Zeitintervalls unterhalb eines vordefinierten Abstandsänderungsschwellenwerts liegen.

Liegt der oder liegen die Abstände außerhalb des vordefinierten Abstandsbereichs oder beträgt die zeitliche Änderung der erfassten Abstandswerte innerhalb mindestens eines vordefinierten Zeitintervalls einen Wert oberhalb des Abstandsänderungsschwellenwerts, so wird dem oder den Abständen eine normale Vorausfahrt zugeordnet. Ein vordefinierter Abstandsbereich wird z.B. durch Abstandswerte zwischen null und fünf Metern zwischen dem Kraftfahrzeug und dem vorausfahrenden Kraftfahrzeug definiert.

Wird ein Kraftfahrzeug abgeschleppt, so fährt dieses im Wesentlichen mit einem konstanten Abstand hinter dem Abschleppfahrzeug her. Dieser Abstand ist von der Länge des Abschleppseils oder der Abschleppstange abhängig und damit durch einen Abstandsbereich begrenzt. Demnach ist eine Abschleppsituation erkennbar, wenn dieser Abstand im Wesentlichen konstant eingehalten wird.

Im Wesentlichen konstant bedeutet, dass die Änderung der Abstandswerte innerhalb mindestens eines vordefinierten Zeitintervalls unterhalb eines vordefinierten Abstandsänderungsschwellenwertes liegt. Bei starken Änderungen der Abstandswerte innerhalb des vordefinierten Zeitintervalls, wenn also das Abschleppfahrzeug z.B. bremst und im Falle eines genutzten Abschleppseils der Fahrer des abgeschleppten Kraftfahrzeugs nicht reagiert, wird demnach dem Abstand keine Abschleppsituation mehr zugeordnet und Kollisionswarnungen und/oder Abstandswarnungen werden nicht verhindert, abgeschaltet oder unterdrückt, sodass der Fahrer berechtigter Weise auf die Gefahr hingewiesen wird.

Demnach wird aufgrund des Erfassens und Auswertens des oder der Abstände bzw. der Abstandswerte eine Abschleppsituation erkannt, wobei jedoch Kollisionswarnungen und/oder Abstandswarnungen in normaler Fahrsituation oder bei Gefahren während des Abschleppvorgangs trotzdem ausgegeben werden.

Ferner ist es mit diesem Ausführungsbeispiel zusätzlich möglich, zwischen einem Abschleppvorgang mit einem Abschleppseil und einer Abschleppstange zu unterscheiden, da sich im Falle einer Abschleppstange immer konstante Abstandswerte zwischen den Kraftfahrzeugen ergeben.

Gemäß einer weiteren Ausführungsform ist ein vorbestimmter Parameter die Relativgeschwindigkeit des Kraftfahrzeugs mit dem Abstandswarnungs- oder Kollisionswarnungssystem zu einem vorausfahrenden Kraftfahrzeug. Im Überwachungsschritt bzw. mit den Überwachungsmitteln werden die Relativgeschwindigkeitswerte erfasst. Diese sind wiederum z.B. mit einer Radareinrichtung des Kraftfahrzeugs unter Berücksichtung der Eigengeschwindigkeit des abgeschleppten Fahrzeugs erfassbar. Im Auswerteschritt bzw. mit dem Auswertemittel wird der Relativgeschwindigkeit eine vermutete Abschleppsituation zugeordnet, wenn die zeitliche Änderung der erfassten Relativgeschwindigkeitswerte innerhalb mindestens eines vordefinierten Zeitintervalls unterhalb eines vordefinierten Relativgeschwindigkeitsänderungsschwellenwertes liegt. Liegt die zeitliche Änderung der erfassten Relativgeschwindigkeitswerte innerhalb des vordefinierten Zeitintervalls auf oder oberhalb des vordefinierten Relativgeschwindigkeitsänderungsschwellenwerts, so wird der Relativgeschwindigkeit eine normale Vorausfahrt zugeordnet.

Somit wird in vorteilhafter Weise berücksichtigt, dass die Relativgeschwindigkeit zwischen Abschleppfahrzeug und abgeschlepptem Kraftfahrzeug im Wesentlichen konstant ist, also die zeitliche Änderung der erfassten Relativgeschwindigkeitswerte innerhalb eines vordefinierten Zeitintervalls unterhalb eines vordefinierten Relativgeschwindigkeitsänderungsschwellenwertes liegt, wenn das Kraftfahrzeug abgeschleppt wird.

Gemäß einer weiteren Ausführungsform ist ein vorbestimmter Parameter die Geschwindigkeit des Kraftfahrzeugs und eine weiterer Parameter die Fahrpedalstellung bzw. Gaspedalstellung des Kraftfahrzeugs. Mit den Überwachungsmitteln bzw. im Überwachungsschritt werden die Geschwindigkeitswerte der Geschwindigkeit und die Positionen der Fahrpedalstellung erfasst. Ferner wird der Geschwindigkeit und der Fahrpedalstellung mit den Auswertemitteln bzw. im Auswerteschritt eine vermutete Abschleppsituation zugeordnet, wenn sich die Fahrpedalstellung in der Ruheposition befindet, also das Fahrpedal vom Fahrer unbetätigt ist, und der erfasste Geschwindigkeitswert oberhalb eines vordefinierten Geschwindigkeitsschwellenwerts liegt. Eine normale Vorausfahrt wird der Geschwindigkeit und der Fahrpedalstellung zugeordnet, wenn sich die Fahrpedalstellung nicht in der Ruheposition befindet, also das Fahrpedal vom Fahrer betätigt wird, oder der erfasste Geschwindigkeitswert auf bzw. unterhalb einem vordefinierten Geschwindigkeitsschwellenwert liegt.

Hier wird vorteilhafterweise berücksichtigt, dass Geschwindigkeitswerte oberhalb eines vordefinierten Geschwindigkeitsschwellenwerts, die insbesondere noch zunehmen, bei der normalen Vorausfahrt üblicherweise nur durch Betätigung des Fahrpedals erreicht werden.

Gemäß einer weiteren Ausführungsform ist ein vorbestimmter Parameter die Gangwahlschalterstellung des Kraftfahrzeugs. Mit den Überwachungsmitteln bzw. im Überwachungsschritt werden die Positionen der Gangwahlschalterstellung erfasst. Mit den Auswertemitteln bzw. im Auswerteschritt wird der Gangwahlschalterstellung eine vermutete Abschleppsituation zugeordnet, wenn die Position des Gangwahlschalters dem neutralen Gang, insbesondere dem sog. Leerlauf, entspricht. Eine normale Vorausfahrt wird der Gangwahlschalterstellung zugeordnet, wenn die Position des Gangwahlschalters einem anderen als dem neutralen Gang entspricht.

Mit dieser Ausführungsform wird demnach vorteilhafterweise berücksichtigt, dass sich während eines Abschleppvorgangs die Gangwahlschalterstellung im neutralen Gang befinden muss und es unüblich ist, während der normalen Vorausfahrt
den Gangwahlschalter in den neutralen Gang zu schalten.

Gemäß einer weiteren Ausführungsform ist ein vordefinierter Parameter die Motordrehzahl des Kraftfahrzeugs. Mit den Überwachungsmitteln bzw. im Überwachungsschritt werden Motordrehzahlwerte der Motordrehzahl erfasst. Im Auswerteschritt bzw. mit den Auswertemitteln wird der Motordrehzahl eine vermutete Abschleppsituation zugeordnet, wenn die Motordrehzahlwerte auf oder unterhalb eines vordefinierten Motordrehzahlschwellenwerts liegen. Im Falle, dass die Motordrehzahlwerte oberhalb des vordefinierten Motordrehzahlschwellenwerts, insbesondere des Leerlaufmotordrehzahlwerts, liegen, wird der Motordrehzahl eine normale Vorausfahrt zugeordnet.

Mit diesem Ausführungsbeispiel wird in vorteilhafter Weise berücksichtigt, dass während der normalen Vorausfahrt, bei üblicherweise eingekuppeltem Getriebe, die Motordrehzahl immer Motordrehzahlwerte oberhalb eines Motordrehzahlschwellenwerts, nämlich des Leerlaufmotordrehzahlwerts, aufweist. Weist die Motordrehzahl Motordrehzahlwerte unterhalb des Motordrehzahlschwellenwerts auf, so ist üblicherweise von einem Stillstand oder wie hier, von einer Abschleppsituation auszugehen, in denen Kollisionswarnungen und/oder Abstandswarnungen nicht ausgegeben werden sollen.

Gemäß einer weiteren Ausführungsform ist ein vordefinierter Parameter die Warnblinkanlageneinstellung des Kraftfahrzeugs. Im Überwachungsschritt bzw. mit den Überwachungsmitteln wird die Aktivierung oder Deaktivierung der Warnblinkanlageneinstellung erfasst. Im Auswerteschritt bzw. mit den Auswertemitteln wird der Warnblinkanlageneinstellung eine vermutete Abschleppsituation zugeordnet, wenn die Warnblinkanlageneinstellung aktiviert ist. Ist die Warnblinkanlageneinstellung deaktiviert wird der Warnblinkanlageneinstellung eine normale Vorausfahrt zugeordnet.

Mit diesem Ausführungsbeispiel wird in vorteilhafter Weise berücksichtigt, dass die Warnblinkanlage während der normalen Vorausfahrt üblicherweise nicht aktiviert wird, während einer Abschleppsituation hingegen schon.

Gemäß einer weiteren Ausführungsform ist ein vordefinierter Parameter die Objekterfassung für vorausfahrende Objekte des Kraftfahrzeugs. Im Überwachungsschritt bzw. mit den Überwachungsmitteln werden Zeitdauern erfasst, in der dasselbe Kraftfahrzeug vorausfährt. Die Unterscheidung verschiedener sich in der Umgebung des Kraftfahrzeugs befindenden Fahrzeuge wird z.B. durch die Kombination einer Radareinrichtung im Kraftfahrzeug und spezieller Software zur Auswertung der Umgebungssituation erreicht. Im Auswerteschritt bzw. mit den Überwachungsmitteln wird der Objekterfassung eine vermutete Abschleppsituation zugeordnet, wenn die Zeitdauer oberhalb eines vordefinierten Zeitdauerschwellenwerts liegt. Liegt die Zeitdauer unterhalb des vordefinierten Zeitdauerschwellenwerts wird der Objekterfassung eine normale Vorausfahrt zugeordnet.

Mit diesem Ausführungsbeispiel wird in vorteilhafter Weise berücksichtigt, dass sich während der normalen Vorausfahrt üblicherweise, zumindest nach Ablauf einer bestimmten Zeit, die vorausfahrenden Fahrzeuge ändern. Bleibt das vorausfahrende Kraftfahrzeug über diese Zeitdauer hinaus immer gleich, also dasselbe, so ist dies ein Anzeichen für eine Abschleppsituation. Bei dem Kraftfahrzeug handelt es sich vorzugsweise um ein Nutzfahrzeug. Ebenso ist das vorausfahrende Fahrzeug vorzugsweise ein Nutzfahrzeug.

Weitere Ausführungsformen der Erfindung ergeben sich aus den Unteransprüchen sowie aus den anhand der Zeichnungen näher erläuterten Ausführungsbeispielen. In den Zeichnungen zeigen:
- Fig. 1: den Ablauf eines Ausführungsbeispiels des Verfahrens,
- Fig. 2: den Ablauf eines weiteren Ausführungsbeispiels des Verfahrens,
- Fig. 3: ein Ausführungsbeispiel der Vorrichtung,
- Fig. 4: eine Abschleppsituation und
- Fig. 5: eine normale Vorausfahrt

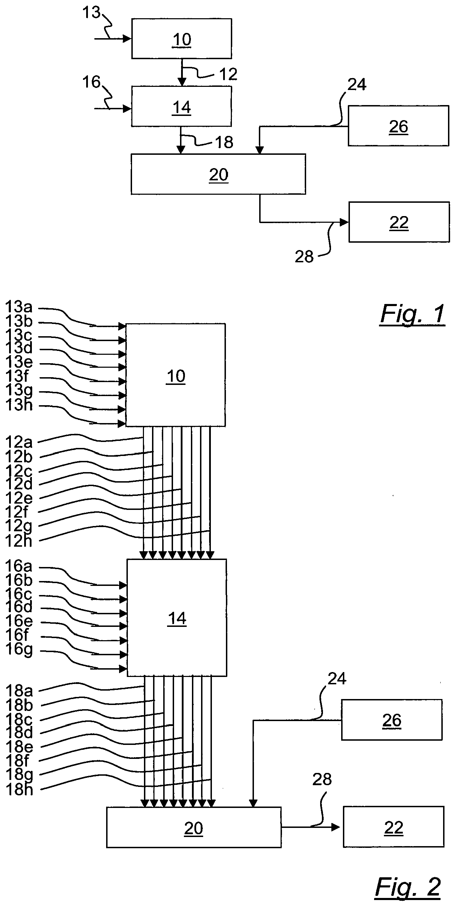

Fig. 1 zeigt den Ablauf eines Ausführungsbeispiels des Verfahrens zum Verhindern der Ausgabe von Kollisionswarnungen und/oder Abstandswarnungen. Zunächst werden in einem Überwachungsschritt 10, Werte 12 eines oder mehrerer vordefinierter Fahrzeugparameter 13, auf die der Überwachungsschritt 10 zugreift, erfasst. Die Werte 12 sind Werte von Fahrzeugparametern 13, die z.B. von Sensoren des Kraftfahrzeugs zur Verfügung gestellt werden und üblicherweise für verschiedenste Funktionen nutzbar sind.

Im Auswerteschritt 14 wird in Abhängigkeit der Werte 12 und der Schwellenwerte bzw. Wertebereiche 16 eine Zuordnung durchgeführt. Dem Parameter 13, wird entweder ein vermuteter Abschleppvorgang oder eine normale Vorausfahrt zugeordnet.

Die Parameter 13, denen im Auswerteschritt 14 entweder eine normale Vorausfahrt oder eine vermutete Abschleppsituation zugeordnet wurde, werden mit ihrer Zuordnung als Parameter mit Zuordnung 18 an einen Abschaltschritt 20 übergeben. In Abhängigkeit der Parameter mit Zuordnung 18 dient der Abschaltschritt 20 zum Verhindern bzw. unterdrücken oder abschalten der Ausgabe von Kollisionswarnungen mit Kollisionswarnungsausgabemitteln 22 und/oder zum Verhindern bzw. unterdrücken oder abschalten der Ausgabe von Abstandswarnungen mit Abstandswarnungsausgabemitteln 22.

Die Kollisionswarnungen oder Abstandswarnungen 24 werden hier mit einem Notbremssystem 26 in Gefahrensituationen erzeugt und vor der Ausgabe mit den Kollisionswarnungsausgabemitteln oder Abstandswarnungsausgabemitteln 22 dem Abschaltschritt 20 zugeführt. Werden dem Abschaltschritt 20 nun Kollisionswarnungen oder Abstandswarnungen 24 zugeführt, werden diese entweder an die Kollisionswarnungsausgabemittel oder Abstandswarnungsausgabemittel 22 für die Ausgabe als "gefilterte" Kollisionswarnungen oder Abstandswarnungen 28 weitergegeben oder vom Abschaltschritt 20 unterdrückt bzw. abgeschaltet, sodass diese nicht für die Abstandswarnungsausgabemittel oder Kollisionswarnungsausgabemittel 22 zur Verfügung stehen und demnach unterdrückt oder verhindert bzw. nicht ausgegeben werden.

Dazu ist dem Abschaltschritt 20 im Ausführungsbeispiel vordefiniert, dass allen Parametern mit Zuordnung 18 eine vermutete Abschleppsituation zugeordnet sein muss, damit die Kollisionswarnungen oder Abstandswarnungen 24 im Abschaltschritt 20 abgeschaltet bzw. unterdrückt werden. Wird demnach vom Auswerteschritt 14 allen Parametern mit Zuordnung 18 eine vermutete Abschleppsituation zugeordnet, so werden die Kollisionswarnungen oder Abstandswarnungen 24 abgeschaltet bzw. unterdrückt oder verhindert und können daher mit den Abstandswarnungsausgabemitteln oder Kollisionswarnungsausgabemitteln 22 nicht ausgegeben werden.

Ferner wird gemäß anderen Ausführungsbeispielen für den Abschaltschritt 20 vordefiniert, dass es ausreichend ist, wenn nur einem oder mehreren bestimmten Parameter mit Zuordnung 18 eine vermutete Abschleppsituation zugeordnet ist, damit die Kollisionswarnungen oder Abstandswarnungen 24 abgeschaltet bzw. unterdrückt oder verhindert werden.

In Fig. 1 ist dargestellt, dass dem Abschalteschritt 20 die Kollisionswarnungen oder Abstandswarnungen 24 zugeführt werden und von diesem "gefiltert" werden. Gemäß einem anderen nicht dargestellten Ausführungsbeispiel wird alternativ vom Abschalteschritt 20 ein Signal an ein Notbremssystem 26 oder einen Abstandsregeltempomaten bzw. deren Steuergerät übermittelt, um dem Notbremssystem 26 oder dem Abstandsregeltempomaten die Information zuzuführen, dass die Ausgabe der Kollisionswarnungen oder Abstandswarnungen 24 mit den Abstandswarnungsausgabemitteln oder Kollisionswarnungsausgabemitteln 22 verhindert werden sollen oder nicht verhindert werden sollen.

Fig. 2 zeigt den Ablauf eines weiteren Ausführungsbeispiels des Verfahrens. Im vorliegenden Ausführungsbeispiel der Fig. 2 sind die Werte 12 Abstandswerte 12a zwischen dem Eigenfahrzeug und einem vorausfahrenden Fahrzeug, Relativgeschwindigkeitswerte 12b zwischen dem Eigenfahrzeug und einem vorausfahrenden Fahrzeug, Geschwindigkeitswerte des Eigenfahrzeugs 12c, die Position der Fahrpedalstellung 12d, die Position der Gangwahlschalterstellung 12e, Motordrehzahlwerte 12f, die Aktivierung oder Deaktivierung der Warnblinkeranlageneinstellung 12g und Zeitdauern 12h in denen dasselbe Fahrzeug vorausfährt. Diese Werte werden mit dem Überwachungsschritt 10 aus überwachten Parametern 13 erfasst. Die entsprechenden Parameter 13, die hier überwacht bzw. erfasst werden, sind der Abstand 13a eines Eigenfahrzeugs zum vorausfahrenden Fahrzeug, die Relativgeschwindigkeit 13b zwischen dem Eigenfahrzeug und einem vorausfahrenden Fahrzeug, die Geschwindigkeit 13c des Eigenfahrzeugs, die Fahrpedalstellung 13d, die Gangwahlschalterstellung 13e, die Motordrehzahl 13f, die Warnblinkeranlageneinstellung 13g und die Objekterfassung 13h.

Die vom Überwachungsschritt 10 erfassten Werte 12 werden an einen Auswerteschritt 14 übergeben. Dem Auswerteschritt stehen mehrere Schwellenwerte und/oder Wertebereiche 16 zur Verfügung, die vordefiniert sind. Derartige Schwellenwerte und/oder Wertebereiche 16 sind gemäß diesem Ausführungsbeispiel ein erstes Zeitintervall 16a, Abstandsänderungsschwellenwerte 16b, ein zweites Zeitintervall 16c Relativgeschwindigkeitsänderungsschwellenwerte 16d, Geschwindigkeitsschwellenwerte16e, Motordrehzahlschwellenwerte 16f und eine Zeitdauerschwelle 16g.

Im vorliegenden Ausführungsbeispiel wird im Auswerteschritt 14 in Abhängigkeit der Werte 12 und der Schwellenwerte bzw. Wertebereiche 16 eine Zuordnung durchgeführt. Dem Parameter 13 wird entweder ein vermuteter Abschleppvorgang oder eine normale Vorausfahrt zugeordnet.

Die Parameter 13, denen im Auswerteschritt 14 entweder eine normale Vorausfahrt oder eine vermutete Abschleppsituation zugeordnet wurde, werden mit ihrer Zuordnung als Parameter mit Zuordnung 18 an einen Abschaltschritt 20 übergeben. Entsprechend werden dem Abschaltschritt 20 ein Abstand mit Zuordnung 18a, die Relativgeschwindigkeit mit Zuordnung 18b, die Geschwindigkeit mit Zuordnung 18c, die Fahrpedalstellung mit Zuordnung 18d, die Gangwahlschalterstellung mit Zuordnung 18e, die Motordrehzahl mit Zuordnung 18f, die Warnblinkeranlageneinstellung mit Zuordnung 18g und die Objekterfassung mit Zuordnung 18h übergeben.

Wie im Ausführungsbeispiel der Fig. 1 dient der Abschaltschritt 20 zum Verhindern bzw. unterdrücken oder abschalten der Ausgabe von Kollisionswarnungen mit Kollisionswarnungsausgabemitteln 22 und/oder zum Verhindern bzw. unterdrücken oder abschalten der Ausgabe von Abstandswarnungen mit Abstandswarnungsausgabemitteln 22 in Abhängigkeit der Parameter mit Zuordnung 18.

Die Kollisionswarnungen oder Abstandswarnungen 24 werden wiederum mit einem Notbremssystem 26 in Gefahrensituationen erzeugt und vor der Ausgabe mit den Kollisionswarnungsausgabemitteln oder Abstandswarnungsausgabemitteln 22 dem Abschaltschritt 20 zugeführt. Auch in diesem Ausführungsbeispiel ist dem Abschaltschritt 20 vordefiniert, dass allen Parametern mit Zuordnung 18, also den Parametern mit Zuordnung 18a bis 18h, eine vermutete Abschleppsituation zugeordnet sein muss, damit die Kollisionswarnungen oder Abstandswarnungen 24 im Abschaltschritt 20 abgeschaltet bzw. unterdrückt werden.

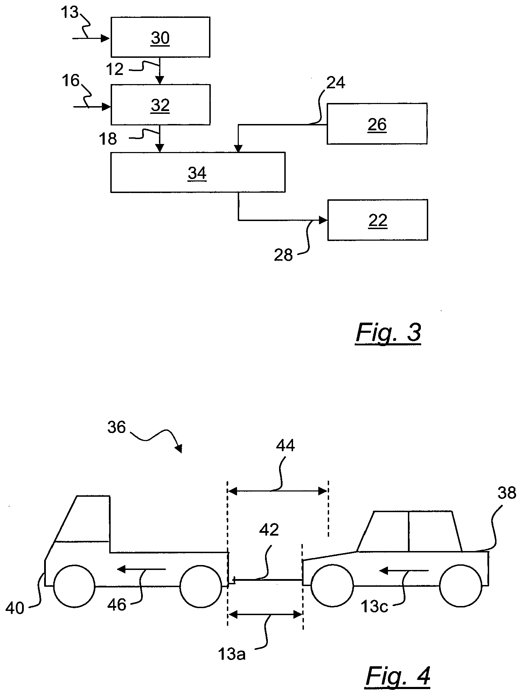

Fig. 3 zeigt ein Ausführungsbeispiel der Vorrichtung. Mit Überwachungsmitteln 30 werden Werte 12 eines oder mehrerer vordefinierter Fahrzeugparameter 13, auf die die Überwachungsmittel 30 zugreifen, erfasst.

Die mit den Überwachungsmitteln 30 erfassten Werte 12 werden an Auswertemittel 32 übergeben. Ferner stehen dem Auswertemittel 32 ein oder mehrere Schwellenwerte und/oder Wertebereiche 16 zur Verfügung, die vordefiniert sind.

Im Auswertemittel 32 wird jeweils jedem der Parameter 13, für die die Werte 12 erfasst wurden, entweder ein vermuteter Abschleppvorgang oder eine normale Vorausfahrt zugeordnet. Die Zuordnung findet in Abhängigkeit der vordefinierten Schwellenwerte und/oder Wertebereiche 16, die für jeden Parameter 13 jeweils vordefiniert sind, statt.

Die Parameter mit Zuordnung 18 werden von den Auswertemitteln 32 Abschaltmitteln 34 zugeführt. Mit den Abschaltmitteln 34 wird in Abhängigkeit der Parameter mit Zuordnung 18 die Ausgabe von Kollisionswarnungen mit Kollisionswarnungsausgabemittel 22 und/oder von Abstandswarnungen mit Abstandswarnungsausgabemittel 22 ausgegeben oder unterdrückt. Hierzu werden Kollisionswarnungen oder Abstandswarnungen 24, die mit einem Notbremssystem 26 in Gefahrensituationen erzeugt werden, den Abschaltmitteln 34 zugeführt und
als "gefilterte" Kollisionswarnungen oder Abstandswarnungen 28 weitergegeben oder von den Abschaltmitteln 34 unterdrückt bzw. abgeschaltet, sodass diese nicht für die Abstandswarnungsausgabemittel oder Kollisionswarnungsausgabemittel 22 zur Verfügung stehen.

Den Abschaltmitteln 34 ist hier z.B. vordefiniert, dass allen Parametern mit Zuordnung 18 eine vermutete Abschleppsituation zugeordnet sein muss, damit die Abschaltmittel 34 die Kollisionswarnungen oder Abstandswarnungen 24 verhindern bzw. unterdrücken. Wird demnach von den Auswertemitteln 32 allen Parameter 13 eine vermutete Abschleppsituation zugeordnet, so werden die Kollisionswarnungen oder Abstandswarnungen 24 abgeschaltet bzw. unterdrückt. Anderenfalls, wenn also einem oder mehreren Parameter mit Zuordnung 18 eine normale Vorausfahrt zugeordnet ist, werden die Kollisionswarnungen oder Abstandswarnungen 24 nicht abgeschaltet bzw. unterdrückt und können daher mit den Abstandswarnungsausgabemitteln oder Kollisionswarnungsausgabemitteln 22 ausgegeben werden.

Fig. 4 zeigt eine Abschleppsituation 36, bei der ein Kraftfahrzeug 38 von einem vorausfahrenden Kraftfahrzeug 40 abgeschleppt wird. Das Kraftfahrzeug 38 wird mit einer Abschleppstange 42 durch das vorausfahrende Kraftfahrzeug 40 abgeschleppt, sodass ein Abstandswert 12a des Abstands 13a zwischen den Kraftfahrzeugen 38, 40 im Wesentlichen konstant ist. Der hier dargestellte Abstand 13a liegt innerhalb eines vordefinierten Abstandsbereichs 44. Die Geschwindigkeit 46 des vorausfahrenden Fahrzeugs 40 entspricht daher im Wesentlichen der Geschwindigkeit 13c des abgeschleppten Fahrzeugs 38. Bei dieser Abschleppsituation 36 wird mit dem hier beschriebenen Verfahren bzw. der zuvor beschriebenen Vorrichtung die Ausgabe von Kollisionswarnungen mit Kollisionswarnungsausgabemittel 22 und/oder von Abstandswarnungen mit Abstandswarnungsausgabemittel 22 unterdrückt.

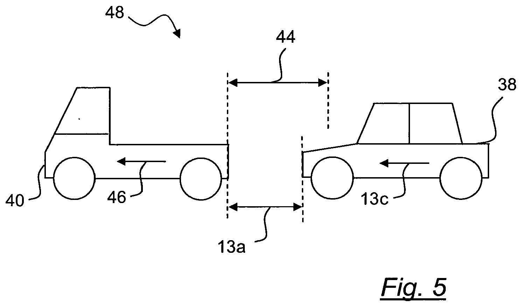

Fig. 5 zeigt eine normale Vorausfahrt 48 eines Kraftfahrzeugs 38. Vor dem Kraftfahrzeug 38 fährt ein vorausfahrendes Kraftfahrzeug 40. Ein Abstandswert 12a des Abstands 13a zwischen den Kraftfahrzeugen 38, 40 ist hier - zumindest in einem vordefinierten ersten Zeitintervall 16a gesehen - nicht konstant, da die Fahrzeuge 38, 40 unabhängig voneinander geführt werden. Die Geschwindigkeit 46 des vorausfahrenden Fahrzeugs 40 unterscheidet sich dementsprechend auch von der Geschwindigkeit 13c des abgeschleppten Fahrzeugs 38. Auch hier liegt der dargestellte Abstand 13a innerhalb eines vordefinierten Abstandsbereichs 44. Daher wird bei dieser normalen Vorausfahrt 48 mit dem hier beschriebenen Verfahren bzw. der zuvor beschriebenen Vorrichtung keine Abschleppsituation 36 erkannt und die Ausgabe von Kollisionswarnungen mit Kol-lisionswarnungsausgabemittel 22 und/oder von Abstandswarnungen mit Abstandswarnungsausgabemittel 22 nicht unterdrückt und daher ausgegeben.

### Bezugszeichenliste (Bestandteil der Beschreibung)

- 10: Überwachungsschritt
- 12: Werte der Parameter
- 12a: Abstandswerte
- 12b: Relativgeschwindigkeitswerte
- 12c: Geschwindigkeitswerte des Kraftfahrzeugs
- 12d: Position der Fahrpedalstellung
- 12e: Position der Gangwahlschalterstellung
- 12f: Motordrehzahlwerte
- 12g: Aktivierung oder Deaktivierung der Warnblinkeranlageneinstellung
- 12h: Zeitdauern in denen dasselbe Fahrzeug vorausfährt
- 13: vordefinierte Fahrzeugparameter
- 13a: Abstand
- 13b: Relativgeschwindigkeit
- 13c: Geschwindigkeit des Kraftfahrzeugs
- 13d: Fahrpedalstellung
- 13e: Gangwahlschalterstellung
- 13f: Motordrehzahl
- 13g: Warnblinkeranlageneinstellung
- 13h: Objekterfassung
- 14: Auswerteschritt
- 16: Schwellenwerte, Wertebereiche
- 16a: erstes Zeitintervall
- 16b: Abstandsänderungsschwellenwert
- 16c: zweites Zeitintervall
- 16d: Relativgeschwindigkeitsänderungsschwellenwert
- 16e: Geschwindigkeitsschwellenwert
- 16f: Motordrehzahlschwellenwert
- 16g: Zeitdauerschwelle
- 18: Parameter mit Zuordnung
- 18a: Abstand mit Zuordnung
- 18b: Relativgeschwindigkeit mit Zuordnung
- 18c: Geschwindigkeit des Kraftfahrzeugs mit Zuordnung
- 18d: Fahrpedalstellung mit Zuordnung
- 18e: Gangwahlschalterstellung mit Zuordnung
- 18f: Motordrehzahl mit Zuordnung
- 18g: Warnblinkeranlageneinstellung mit Zuordnung
- 18h: Objekterfassung mit Zuordnung
- 20: Abschaltschritt
- 22: Kollisions-/Abstandswarnungsausgabemittel
- 24: Kollisions-/Abstandswarnungen
- 26: Notbremssystem
- 28: gefilterte Kollisions-/Abstandswarnungen
- 30: Überwachungsmittel
- 32: Auswertemittel
- 34: Abschaltmittel
- 36: Abschleppsituation
- 38: Kraftfahrzeug
- 40: vorausfahrendes Kraftfahrzeug
- 42: Abschleppstange
- 44: Abstandsbereich
- 46: Geschwindigkeit eines vorausfahrenden Fahrzeugs
- 48: normale Vorausfahrt

## Patentansprüche

1. Verfahren zum Verhindern der Ausgabe von Kollisionswarnungen (24) und/oder Abstandswarnungen (24) bei Kraftfahrzeugen (38) mit Kollisionswarnungsausgabemitteln (22) und/oder Abstandswarnungsausgabemitteln (22), wobei das Verfahren folgende Schritte umfasst:
a) einen Überwachungsschritt (10), bei dem Werte (12) eines oder mehrerer vordefinierter Fahrzeugparameter (13) erfasst werden,
b) einen Auswerteschritt (14), bei dem oder jeweils jedem der Fahrzeugparameter (13) in Abhängigkeit des oder der erfassten Werte (12) des jeweiligen Fahrzeugparameters (13) entweder eine vermutete Abschleppsituation (36) oder eine normale Vorausfahrt (48) zugeordnet wird sowie
c) einen Abschaltschritt (20), bei dem die Ausgabe von Kollisionswarnungen (24) der Kollisionswarnungsausgabemittel (22) und/oder von Abstandswarnungen (24) der Abstandswarnungsausgabemittel (22) im Falle, dass eine vermutete Abschleppsituation (36) entweder einem, mehreren oder allen Fahrzeugparametern (13) zugeordnet ist, verhindert wird.

2. Verfahren nach Anspruch 1,
**dadurch gekennzeichnet, dass**
ein vordefinierter Fahrzeugparameter (13) mindestens ein Abstand (13a) zwischen dem Kraftfahrzeug (38) und einem vorausfahrenden Kraftfahrzeug (40) ist, im Überwachungsschritt (10) Abstandswerte (12a) des Abstands (13a) erfasst werden und im Auswerteschritt (14) dem Abstand (13a) im Fall dass, die erfasste Abstandswerte (12a) innerhalb eines vordefinierten Abstandsbereichs (44) und die zeitliche Änderung der erfassten Abstandswerte (12a) innerhalb mindestens eines vordefinierten ersten Zeitintervalls (16a) unterhalb eines vordefinierten Abstandsänderungsschwellenwerts (16b) liegen, eine vermutete Abschleppsituation (36) und anderenfalls eine normale Vorausfahrt (48) zugeordnet wird.

3. Verfahren nach Anspruch 1 oder 2,
**dadurch gekennzeichnet, dass**
ein vordefinierter Fahrzeugparameter (13) die Relativgeschwindigkeit (13b) des Kraftfahrzeugs (38) zu einem vorausfahrenden Kraftfahrzeug (40) ist, im Überwachungsschritt (10) Relativgeschwindigkeitswerte (12b) der Relativgeschwindigkeit (13b) erfasst werden und im Auswerteschritt (14) der Relativgeschwindigkeit (13b) im Fall, dass die zeitliche Änderung der erfassten Relativgeschwindigkeitswerte (12b) innerhalb mindestens eines vordefinierten zweiten Zeitintervalls (16c) unterhalb eines vordefinierten Relativgeschwindigkeitsänderungsschwellenwerts (16d) liegt, eine vermutete Abschleppsituation (36) und anderenfalls eine normale Vorausfahrt (48) zugeordnet wird.

4. Verfahren nach einem der vorhergehenden Ansprüche,
**dadurch gekennzeichnet, dass**
ein vordefinierter Fahrzeugparameter (13) die Geschwindigkeit (13c) des Kraftfahrzeugs (38) und ein weiterer vordefinierter Fahrzeugparameter (13) die Fahrpedalstellung (13d) des Kraftfahrzeugs (38) ist, im Überwachungsschritt (10) Geschwindigkeitswerte (12c) der Geschwindigkeit (13c) und Positionen (12d) der Fahrpedalstellung (13d) erfasst werden, im Auswerteschritt (14) der Geschwindigkeit (13c) des Kraftfahrzeugs (38) und der Fahrpedalstellung (13d) im Falle, dass sich die Position (12d) der Fahrpedalstellung (13d) in der Ruheposition und der erfasste Geschwindigkeitswert (12c) oberhalb eines vordefinierten Geschwindigkeitsschwellenwerts (16e) liegt, eine vermutete Abschleppsituation (36) und anderenfalls eine normale Vorausfahrt (48) zugeordnet wird.

5. Verfahren nach einem der vorhergehenden Ansprüche,
**dadurch gekennzeichnet, dass**
ein vordefinierter Fahrzeugparameter (13) die Gangwahlschalterstellung (13e) des Kraftfahrzeugs (38) ist, im Überwachungsschritt (10) Positionen (12e) der Gangwahlschalterstellung (13e) erfasst werden und im Auswerteschritt (14) der Gangwahlschalterstellung (13e) im Fall, dass die Position (12e) der Gangwahlschalterstellung (13e) dem neutralen Gang entspricht, eine vermutete Abschleppsituation (36) und anderenfalls eine normale Vorausfahrt (48) zugeordnet wird.

6. Verfahren nach einem der vorhergehenden Ansprüche,
**dadurch gekennzeichnet, dass**
ein vordefinierter Fahrzeugparameter (13) die Motordrehzahl (13f) des Kraftfahrzeugs (38) ist, im Überwachungsschritt (10) Motordrehzahlwerte (12f) der Motordrehzahl (13f) erfasst werden und im Auswerteschritt (14) der Motordrehzahl (13f) im Fall, dass die Motordrehzahlwerte (12f) auf oder unterhalb eines vordefinierten Motordrehzahlschwellenwerts (16f) liegen, eine vermutete Abschleppsituation (36) und anderenfalls eine normale Vorausfahrt (48) zugeordnet wird.

7. Verfahren nach einem der vorhergehenden Ansprüche,
**dadurch gekennzeichnet, dass**
ein vordefinierter Fahrzeugparameter (13) die Warnblinkanlageneinstellung (13g) des Kraftfahrzeugs (38) ist, im Überwachungsschritt (10) die Aktivierung oder Deaktivierung (12g) der Warnblinkanlageneinstellung (13g) erfasst wird und im Auswerteschritt (14) der Warnblinkanlageneinstellung (13g) im Fall, dass die Warnblinkanlageneinstellung (13g) aktiviert ist, eine vermutete Abschleppsituation (36) und anderenfalls eine normale Vorausfahrt (48) zugeordnet wird.

8. Verfahren nach einem der vorhergehenden Ansprüche,
**dadurch gekennzeichnet, dass**
ein vordefinierter Fahrzeugparameter (13) die Objekterfassung (13h) für vorausfahrende Objekte des Kraftfahrzeugs (38) ist, im Überwachungsschritt (10) Zeitdauern (12h) erfasst werden, in der dasselbe Kraftfahrzeug vorausfährt und im Auswerteschritt (14) der Objekterfassung (13h) im Fall, dass die Zeitdauer (12h) oberhalb einer vordefinierten Zeitdauerschwelle (16g) liegt, eine vermutete Abschleppsituation (36) und anderenfalls eine normale Vorausfahrt (48) zugeordnet wird.

9. Vorrichtung zur Verhinderung der Ausgabe von Kollisionswarnungen (24) und/oder Abstandswarnungen (24) bei Kraftfahrzeugen (38) mit Kollisionswarnungsausgabemitteln (22) und/oder Abstandswarnungsausgabemitteln (22), wobei die Vorrichtung folgende Mittel umfasst:
a) Überwachungsmittel (30) zum Erfassen der Werte (12) eines oder mehrerer vordefinierter Fahrzeugparameter (13),
b) Auswertemittel (32) zum Zuordnen entweder einer vermuteten Abschleppsituation (36) oder eine normalen Vorausfahrt (48) zu dem oder jeweils zu jedem der Fahrzeugparameter (13) in Abhängigkeit des oder der erfassten Werte (12) des jeweiligen Fahrzeugparameters (13) sowie
c) Abschaltmittel (34) zur Verhinderung der Ausgabe von Kollisionswarnungen (24) der Kollisionswarnungsausgabemittel (22) und/oder von Abstandswarnungen (24) der Abstandswarnungsausgabemittel (22) im Falle, dass eine vermutete Abschleppsituation (36) entweder einem, mehreren oder allen Fahrzeugparametern (13) zugeordnet ist.

10. Vorrichtung nach Anspruch 9,
**dadurch gekennzeichnet, dass**
ein vordefinierter Fahrzeugparameter (13) mindestens ein Abstand (13a) zwischen dem Kraftfahrzeug (38) und einem vorausfahrenden Kraftfahrzeug (40) ist, die Überwachungsmittel (30) derart ausgebildet sind, um Abstandswerte (12a) des Abstands (13a) zu erfassen und die Auswertemittel (32) derart ausgebildet sind, um dem Abstand (13a) im Fall, dass die erfassten Abstandswerte (12a) innerhalb eines vordefinierten Abstandsbereiches (44) und die zeitliche Änderung der erfassten Abstandswerte (12a) innerhalb mindestens eines vordefinierten ersten Zeitintervalls (16a) unterhalb eines vordefinierten Abstandsänderungsschwellenwerts (16b) liegen, eine vermutete Abschleppsituation (36) und anderenfalls eine normale Vorausfahrt (48) zuzuordnen.

11. Vorrichtung nach Anspruch 9 oder 10,
**dadurch gekennzeichnet, dass**
ein vordefinierter Fahrzeugparameter (13) die Relativgeschwindigkeit (13b) des Kraftfahrzeugs (38) zu einem vorausfahrenden Kraftfahrzeug (40) ist, die Überwachungsmittel (30) derart ausgebildet sind, um Relativgeschwindigkeitswerte (12b) der Relativgeschwindigkeit (13b) zu erfassen und die Auswertemittel (32) derart ausgebildet sind, um der Relativgeschwindigkeit (13b) im Fall, dass die zeitliche Änderung der erfassten Relativgeschwindigkeitswerte (12b) innerhalb mindestens eines vordefinierten zweiten Zeitintervalls (16c) unterhalb eines vordefinierten Relativgeschwindigkeitsänderungsschwellenwerts (16d) liegt, eine vermutete Abschleppsituation (36) und anderenfalls eine normale Vorausfahrt (48) zuzuordnen.

12. Vorrichtung nach einem der Ansprüche 9 bis 11,
**dadurch gekennzeichnet, dass**
ein vordefinierter Fahrzeugparameter (13) die Geschwindigkeit (13c) des Kraftfahrzeug (38) und ein weiterer vordefinierter Fahrzeugparameter (13) die Fahrpedalstellung (13d) des Kraftfahrzeugs (38) ist, die Überwachungsmittel (30) derart ausgebildet sind, um Geschwindigkeitswerte (12c) der Geschwindigkeit (13c) und Positionen (12d) der Fahrpedalstellung (13d) zu erfassen und die Auswertemittel (32) derart ausgebildet sind, um der Geschwindigkeit (13c) des Kraftfahrzeugs (38) und der Fahrpedalstellung (13d) im Falle, dass sich die Position (12d) der Fahrpedalstellung (13d) in der Ruheposition befindet und der erfasste Geschwindigkeitswert (12c) oberhalb eines vordefinierten Geschwindigkeitsschwellenwerts (16e) liegt, eine vermutete Abschleppsituation (36) und anderenfalls eine normale Vorausfahrt (48) zuzuordnen.

13. Vorrichtung nach einem der Ansprüche 9 bis 12,
**dadurch gekennzeichnet, dass**
ein vordefinierter Fahrzeugparameter (13) die Gangwahlschalterstellung (13e) des Kraftfahrzeugs (38) ist, die Überwachungsmittel (30) derart ausgebildet sind, um Positionen (12e) der Gangwahlschalterstellung (13e) zu erfassen und die Auswertemittel (32) derart ausgebildet sind, um der Gangwahlschalterstellung (13e) im Fall, dass die Position (12e) der Gangwahlschalterstellung (13e) dem neutralen Gang entspricht, eine vermutete Abschleppsituation (36) und anderenfalls eine normale Vorausfahrt (48) zuzuordnen.

14. Vorrichtung nach einem der Ansprüche 9 bis 13,
**dadurch gekennzeichnet, dass**
ein vordefinierter Fahrzeugparameter (13) die Motordrehzahl (13f) des Kraftfahrzeugs (38) ist, die Überwachungsmittel (30) derart ausgebildet sind, um Motordrehzahlwerte (12f) der Motordrehzahl (13f) zu erfassen und die Auswertemittel (32) derart ausgebildet sind, um der Motordrehzahl (13f) im Fall, dass die Motordrehzahlwerte (12f) auf oder unterhalb eines vordefinierten Motordrehzahlschwellenwerts (16f) liegen, eine vermutete Abschleppsituation (36) und anderenfalls eine normale Vorausfahrt (48) zuzuordnen.

15. Vorrichtung nach einem der Ansprüche 9 bis 14,
**dadurch gekennzeichnet, dass**
ein vordefinierter Fahrzeugparameter (13) die Warnblinkanlageneinstellung (13g) des Kraftfahrzeugs ist, die Überwachungsmittel (30) derart ausgebildet sind, um die Aktivierung oder Deaktivierung (12g) der Warnblinkanlageneinstellung (13g) zu erfassen und die Auswertemittel (32) derart ausgebildet sind, um der Warnblinkanlageneinstellung (13g) im Fall, dass die Warnblinkanlageneinstellung (13g) aktiviert ist, eine vermutete Abschleppsituation (36) und anderenfalls eine normale Vorausfahrt (48) zuzuordnen.

16. Vorrichtung nach einem der Ansprüche 9 bis 15,
**dadurch gekennzeichnet, dass**
ein vordefinierter Fahrzeugparameter (13) die Objekterfassung (13h) für vorausfahrende Objekte des Kraftfahrzeugs (38) ist, die Überwachungsmittel (30) derart ausgebildet sind, um Zeitdauern (12h) zu erfassen, in der dasselbe Kraftfahrzeug vorausfährt und die Auswertemittel (32) derart ausgebildet sind, um der Objekterfassung (13h) im Fall, dass die Zeitdauer (12h) oberhalb einer vordefinierten Zeitdauerschwelle (16g) liegt, eine vermutete Abschleppsituation (36) und anderenfalls eine normale Vorausfahrt (48) zuzuordnen.

17. Fahrzeug (38), insbesondere Nutzfahrzeug, mit einer Vorrichtung nach einem der Ansprüche 9 bis 16 zur Durchführung eines Verfahrens nach einem der Ansprüche 1 bis 8.

## Claims

1. Method for preventing the output of collision warnings (24) and/or distance warnings (24) in the case of motor vehicles (38) having collision warning output means (22) and/or distance warning output means (22), wherein the method comprises the following steps:
a) a monitoring step (10), in which values (12) of one or more predefined vehicle parameters (13) are captured,
b) an evaluation step (14), in which either a presumed tow-away situation (36) or normal travel ahead (48) is assigned or in each case to each of the vehicle parameters (13) on the basis of the captured value (s) (12) of the respective vehicle parameter (13), and
c) a shutdown step (20), in which the output of collision warnings (24) from the collision warning output means (22) and/or of distance warnings (24) from the distance warning output means (22) is prevented if a presumed tow-away situation (36) is assigned to either one, more or all vehicle parameters (13).

2. Method according to Claim 1,
**characterized in that**
one predefined vehicle parameter (13) is at least one distance (13a) between the motor vehicle (38) and a motor vehicle (40) travelling ahead, distance values (12a) of the distance (13a) are captured in the monitoring step (10) and a presumed tow-away situation (36) is assigned to the distance (13a) in the evaluation step (14) if the captured distance values (12a) are within a predefined distance range (44) and the change in the captured distance values (12a) over time is below a predefined distance change threshold value (16b) within at least one predefined first time interval (16a), and normal travel ahead (48) is assigned to said distance otherwise.

3. Method according to Claim 1 or 2,
**characterized in that**
one predefined vehicle parameter (13) is the relative velocity (13b) of the motor vehicle (38) in relation to a motor vehicle (40) travelling ahead, relative velocity values (12b) of the relative velocity (13b) are captured in the monitoring step (10) and a presumed tow-away situation (36) is assigned to the relative velocity (13b) in the evaluation step (14) if the change in the captured relative velocity values (12b) over time is below a predefined relative velocity change threshold value (16d) within at least one predefined second time interval (16c), and normal travel ahead (48) is assigned to said relative velocity otherwise.

4. Method according to one of the preceding claims,
**characterized in that**
one predefined vehicle parameter (13) is the velocity (13c) of the motor vehicle (38) and another predefined vehicle parameter (13) is the accelerator pedal position (13d) of the motor vehicle (38), velocity values (12c) of the velocity (13c) and positions (12d) of the accelerator pedal position (13d) are captured in the monitoring step (10), a presumed tow-away situation (36) is assigned to the velocity (13c) of the motor vehicle (38) and to the accelerator pedal position (13d) in the evaluation step (14) if the position (12d) of the accelerator pedal position (13d) is in the position of rest and the captured velocity value (12c) is above a predefined velocity threshold value (16e), and normal travel ahead (48) is assigned to said velocity and accelerator pedal position otherwise.

5. Method according to one of the preceding claims,
**characterized in that**
one predefined vehicle parameter (13) is the gear selector switch position (13e) of the motor vehicle (38), positions (12e) of the gear selector switch position (13e) are captured in the monitoring step (10) and a presumed tow-away situation (36) is assigned to the gear selector switch position (13e) in the evaluation step (14) if the position (12e) of the gear selector switch position (13e) is consistent with the neutral gear, and normal travel ahead (48) is assigned to said gear selector switch position otherwise.

6. Method according to one of the preceding claims,
**characterized in that**
one predefined vehicle parameter (13) is the engine speed (13f) of the motor vehicle (38), engine speed values (12f) of the engine speed (13f) are captured in the monitoring step (10) and a presumed tow-away situation (36) is assigned to the engine speed (13f) in the evaluation step (14) if the engine speed values (12f) are at or below a predefined engine speed threshold value (16f), and normal travel ahead (48) is assigned to said engine speed otherwise.

7. Method according to one of the preceding claims,
**characterized in that**
one predefined vehicle parameter (13) is the hazard warning light setting (13g) of the motor vehicle (38), the activation or deactivation (12g) of the hazard warning light setting (13g) is detected in the monitoring step (10) and a presumed tow-away situation (36) is assigned to the hazard warning light setting (13g) in the evaluation step (14) if the hazard warning light setting (13g) is activated, and normal travel ahead (48) is assigned to said hazard warning light setting otherwise.

8. Method according to one of the preceding claims,
**characterized in that**
one predefined vehicle parameter (13) is the object detection (13h) for objects travelling ahead of the motor vehicle (38), periods (12h) in which the same motor vehicle travels ahead are detected in the monitoring step (10) and a presumed tow-away situation (36) is assigned to the object detection (13h) in the evaluation step (14) if the period (12h) is above a predefined period threshold (16g), and normal travel ahead (48) is assigned to said object detection otherwise.

9. Apparatus for preventing the output of collision warnings (24) and/or distance warnings (24) in the case of motor vehicles (38) having collision warning output means (22) and/or distance warning output means (22), wherein the apparatus comprises the following means:
a) monitoring means (30) for capturing the values (12) of one or more predefined vehicle parameters (13),
b) evaluation means (32) for assigning either a presumed tow-away situation (36) or normal travel ahead (48) to the or in each case to each of the vehicle parameters (13) on the basis of the captured value(s) (12) of the respective vehicle parameter (13), and,
c) shutdown means (34) for preventing the output of collision warnings (24) from the collision warning output means (22) and/or of distance warnings (24) from the distance warning output means (22) if a presumed tow-away situation (36) is assigned to either one, more or all vehicle parameters (13).

10. Apparatus according to Claim 9,
**characterized in that**
one predefined vehicle parameter (13) is at least one distance (13a) between the motor vehicle (38) and a motor vehicle (40) travelling ahead, the monitoring means (30) are designed to capture distance values (12a) of the distance (13a), and the evaluation means (32) are designed to assign a presumed tow-away situation (36) to the distance (13a) if the captured distance values (12a) are within a predefined distance range (44) and the change in the captured distance values (12a) over time is below a predefined distance change threshold value (16b) within at least one predefined first time interval (16a), and to assign normal travel ahead (48) to said distance otherwise.

11. Apparatus according to Claim 9 or 10,
**characterized in that**
one predefined vehicle parameter (13) is the relative velocity (13b) of the motor vehicle (38) in relation to a motor vehicle (40) travelling ahead, the monitoring means (30) are designed to capture relative velocity values (12b) of the relative velocity (13b), and the evaluation means (32) are designed to assign a presumed tow-away situation (36) to the relative velocity (13b) if the change in the captured relative velocity values (12b) over time is below a predefined relative velocity change threshold value (16d) within at least one predefined second time interval (16c), and to assign normal travel ahead (48) to said relative velocity otherwise.

12. Apparatus according to one of Claims 9 to 11,
**characterized in that**
one predefined vehicle parameter (13) is the velocity (13c) of the motor vehicle (38) and another predefined vehicle parameter (13) is the accelerator pedal position (13d) of the motor vehicle (38), the monitoring means (30) are designed to capture velocity values (12c) of the velocity (13c) and positions (12d) of the accelerator pedal position (13d), and the evaluation means (32) are designed to assign a presumed tow-away situation (36) to the velocity (13c) of the motor vehicle (38) and to the accelerator pedal position (13d) if the position (12d) of the accelerator pedal position (13d) is in the position of rest and the captured velocity value (12c) is above a predefined velocity threshold value (16e), and to assign normal travel ahead (48) to said velocity and accelerator pedal position otherwise.

13. Apparatus according to one of Claims 9 to 12,
**characterized in that**
one predefined vehicle parameter (13) is the gear selector switch position (13e) of the motor vehicle (38), the monitoring means (30) are designed to capture positions (12e) of the gear selector switch position (13e), and the evaluation means (32) are designed to assign a presumed tow-away situation (36) to the gear selector switch position (13e) if the position (12e) of the gear selector switch position (13e) is consistent with the neutral gear, and to assign normal travel ahead (48) to said gear selector switch position otherwise.

14. Apparatus according to one of Claims 9 to 13,
**characterized in that**
one predefined vehicle parameter (13) is the engine speed (13f) of the motor vehicle (38), the monitoring means (30) are designed to capture engine speed values (12f) of the engine speed (13f), and the evaluation means (32) are designed to assign a presumed tow-away situation (36) to the engine speed (13f) if the engine speed values (12f) are at or below a predefined engine speed threshold value (16f), and to assign normal travel ahead (48) to said engine speed otherwise.

15. Apparatus according to one of Claims 9 to 14,
**characterized in that**
one predefined vehicle parameter (13) is the hazard warning light setting (13g) of the motor vehicle, the monitoring means (30) are designed to detect the activation or deactivation (12g) of the hazard warning light setting (13g), and the evaluation means (32) are designed to assign a presumed tow-away situation (36) to the hazard warning light setting (13g) if the hazard warning light setting (13g) is activated, and to assign normal travel ahead (48) to said hazard warning light setting otherwise.

16. Apparatus according to one of Claims 9 to 15,
**characterized in that**
one predefined vehicle parameter (13) is the object detection (13h) for objects travelling ahead of the motor vehicle (38), the monitoring means (30) are designed to detect periods (12h) in which the same motor vehicle travels ahead, and the evaluation means (32) are designed to assign a presumed tow-away situation (36) to the object detection (13h) if the period (12h) is above a predefined period threshold (16g), and to assign normal travel ahead (48) to said object detection otherwise.

17. Vehicle (38), in particular utility vehicle, having an apparatus according to one of Claims 9 to 16 for performing a method according to one of Claims 1 to 8.

## Revendications

1. Procédé destiné à empêcher l'émission d'avertissements de collision (24) et/ou d'avertissements de distance (24) dans des véhicules automobiles (38), comportant des moyens d'émission d'avertissements de collision (22) et/ou des moyens d'émission d'avertissements de distance (22), dans lequel le procédé comprend les étapes suivantes :
a) une étape de surveillance (10) lors de laquelle des valeurs (12) d'un ou de plusieurs paramètres de véhicule (13) prédéfinis sont détectés,
b) une étape d'évaluation (14) lors de laquelle soit une situation de remorquage présumée (36), soit un trajet normal d'avance (48) est affecté ou à chacun des paramètres de véhicule (13) en fonction de la ou des valeurs détectés (12) du paramètre de véhicule (13) respectif, et
c) une étape de désactivation (20) lors de laquelle l'émission d'avertissements de collision (24) du moyen d'émission d'avertissements de collision (22) et/ou d'avertissements de distance (24) du moyen d'émission d'avertissements de distance (22) est empêchée dans le cas où une situation de remorquage présumée (36) est associée à l'un, à plusieurs ou à la totalité de paramètres de véhicule (13).

2. Procédé selon la revendication 1,
**caractérisé en ce qu'**un paramètre de véhicule (13) prédéfini est au moins une distance (13a) entre le véhicule automobile (38) et un véhicule automobile précédent (40), lors de l'étape de surveillance (10), des valeurs de distance (12a) de la distance (13a) sont détectées et lors de l'étape d'évaluation (14), dans le cas où les valeurs de distance (12a) détectées se situent dans une plage de distance prédéfinie (44) et où la variation temporelle des valeurs de distance (12a) détectées se situe au cours d'au moins un premier intervalle de temps prédéfini (16a) en-dessous d'une valeur de seuil prédéfinie (16b), une situation de remorquage présumée (36), et dans le cas contraire, une marche avant normale (48) est associée à la distance (13a).

3. Procédé selon la revendication 1 ou 2,
**caractérisé en ce qu'**un paramètre de véhicule (13) prédéfini est la vitesse relative (13b) du véhicule automobile (38) par rapport à un véhicule automobile précédent (40), lors de l'étape de surveillance (10), des valeurs de vitesse relative (12b) de la vitesse relative (13b) sont détectées, et lors de l'étape d'évaluation (14), dans le cas où la variation temporelle des valeurs de vitesse relative détectées (12b) au cours d'au moins un deuxième intervalle de temps prédéfini (16c) est inférieure à une valeur de seuil de variation de vitesse relative prédéfinie (16d), une situation de remorquage présumée (36) et, dans le cas contraire, une marche avant normale (48) est associée à la vitesse relative (13b).

4. Procédé selon l'une des revendications précédentes,
**caractérisé en ce qu'**un paramètre de véhicule (13) prédéfini est la vitesse (13c) du véhicule automobile (38) et un autre paramètre de véhicule (13) prédéfini est le réglage (13d) de la pédale d'accélération du véhicule automobile (38), lors de l'étape de surveillance (10), des valeurs de vitesse (12c) de la vitesse (13c) et des positions (12d) du réglage (13d) de la pédale d'accélération sont détectées, lors de l'étape d'évaluation (14), dans le cas où la position (12d) de la position de la pédale d'accélération (13d) en position de repos et la valeur de vitesse mesurée (12c) est supérieure à une valeur de seuil de vitesse prédéfinie (16e), une situation de remorquage présumée (36) et, dans le cas contraire, une marche avant normale (48) est associée à la vitesse (13c) du véhicule automobile (38) et au réglage de la pédale d'accélération (13d).

5. Procédé selon l'une des revendications précédentes,
**caractérisé en ce qu'**un paramètre de véhicule (13) prédéfini est le réglage (13e) du levier de vitesses du véhicule automobile (38), lors de l'étape de surveillance (10) des positions (12e) du réglage (13e) du levier de vitesses sont détectées et lors de l'étape d'évaluation (14), dans le cas où la position (12e) du réglage (13e) du levier de vitesses correspond au point mort, une situation de remorquage présumée (36) et, dans le cas contraire, une marche avant normale (48) est associée au réglage (13e) du levier de vitesses.

6. Procédé selon l'une des revendications précédentes,
**caractérisé en ce qu'**un paramètre de véhicule (13) prédéfini est le régime moteur (13f) du véhicule automobile (38), lors de l'étape de surveillance (10), des valeurs de régime moteur (12f) du régime moteur (13f) sont détectées et lors de l'étape d'évaluation (14), dans le cas où les valeurs de régime moteur (12f) sont égales ou inférieures à une valeur de seuil de régime moteur prédéfinie (16f), une situation de remorquage présumée (36) et, dans le cas contraire, une marche avant normale (48) est associée au régime moteur (13f) .

7. Procédé selon l'une des revendications précédentes, **caractérisé en ce qu'**un paramètre de véhicule (13) prédéfini est le réglage (13g) du système d'avertissement de danger du véhicule automobile (38), lors de l'étape de surveillance (10), l'activation ou la désactivation (12g) du réglage (13g) du système d'avertissement de danger est détectée et lors de l'étape d'évaluation (14), si le réglage (13g) est activé, une situation présumée de traction (36) et, dans le cas contraire, une marche avant normale (13g) est associée au réglage (13g) du système d'avertissement de danger.

8. Procédé selon l'une des revendications précédentes, **caractérisé en ce qu'**un paramètre de véhicule (13) prédéfini est la détection d'objet (13h) pour des objets situés à l'avant du véhicule automobile (38), lors de l'étape de surveillance (10), des durées (12h) pendant lesquelles le même véhicule automobile roule vers l'avant sont détectées, et lors de l'étape d'évaluation (14), dans le cas où la durée (12h) dépasse un seuil de durée (16g) prédéfini, une situation de remorquage présumée (36) et, dans le cas contraire, une marche avant normale (48) est associée à la détection d'objet (13h).

9. Dispositif destiné à empêcher l'émission d'avertissements de collision (24) et/ou d'avertissements de distance (24) dans des véhicules automobiles (38), comportant des moyens d'émission d'avertissements de collision (22) et/ou d'émission d'avertissements de distance (22), dans lequel l'appareil comprend les moyens suivants :
a) des moyens de surveillance (30) destinés à détecter les valeurs (12) d'un ou de plusieurs paramètres de véhicule (13) prédéfinis,
b) des moyens d'évaluation (32) destinés à associer soit une situation de remorquage présumée (36), soit une marche avant normale (48) au ou à chacun des paramètres de véhicule (13) en fonction de la ou des valeurs détectées (12) du paramètre de véhicule (13) respectif, et
c) des moyens de désactivation (34) destinés à empêcher l'émission d'avertissements de collision (24) du dispositif d'émission d'avertissements de collision (22) et/ou d'avertissements de distance (24) du dispositif d'émission d'avertissements de distance (22) dans le cas où une situation de remorquage présumée (36) est associée à l'un, à plusieurs ou à la totalité de paramètres de véhicule (13).

10. Dispositif selon la revendication 9,
**caractérisé en ce qu'**un paramètre de véhicule (13) prédéfini est au moins une distance (13a) entre le véhicule automobile (38) et un véhicule automobile précédent (40), les moyens de surveillance (30) sont conçus pour détecter des valeurs de distance (12a) de la distance (13a) et les moyens d'évaluation (32) sont conçus, dans le cas où les valeurs de distance (12a) détectées se situent dans une plage de distance prédéfinie (44) et où la variation temporelle des valeurs de distance (12a) détectées se situe dans au moins un premier intervalle de temps prédéfini (16a) en-dessous d'une valeur de seuil prédéfinie de variation de distance (16b), pour associer une situation de remorquage présumée (36) et, dans le cas contraire, une marche avant normale (48) à la distance (13a).

11. Dispositif selon la revendication 9 ou 10,
**caractérisé en ce qu'**un paramètre de véhicule (13) prédéfini est la vitesse relative (13b) du véhicule automobile (38) par rapport à un véhicule automobile précédent (40), les moyens de surveillance (30) sont conçus pour détecter des valeurs de vitesse relative (12b) de la vitesse relative (13b) et les moyens d'évaluation (32) sont conçus, dans le cas où la variation temporelle des valeurs de vitesse relative détectées (12b) au cours d'au moins un second intervalle de temps prédéfini (16c) est inférieure à une valeur de seuil prédéfinie (16d) de la variation de vitesse relative, pour associer une situation de remorquage présumée (36) et, dans le cas contraire, une marche avant normale (48) à la vitesse relative (13b).

12. Dispositif selon l'une des revendications 9 à 11,
**caractérisé en ce qu'**un paramètre de véhicule (13) prédéfini est la vitesse (13c) du véhicule automobile (38) et un autre paramètre de véhicule (13) prédéfini est le réglage (13d) de la pédale d'accélération du véhicule automobile (38), les moyens de surveillance (30) sont conçus de manière à détecter des valeurs de vitesse (12c) de la vitesse (13c) et des positions (12d) du réglage (13d) de la pédale d'accélération, et les moyens d'évaluation (32) sont conçus, dans le cas où la position (12d) du réglage (13d) de la pédale d'accélération est en position repos et où la valeur de vitesse détectée (12c) est supérieure à une valeur de seuil (16e) prédéfinie, pour associer une situation de remorquage présumée (36) et, dans le cas contraire, une marche avant normale avant (48) à la vitesse (13c) du véhicule automobile (38) et au réglage (13d) de la pédale d'accélération.

13. Dispositif selon l'une des revendications 9 à 12,
**caractérisé en ce qu'**un paramètre de véhicule (13) prédéfini est le réglage (13e) du levier de vitesses du véhicule automobile (38), les moyens de surveillance (30) sont conçus pour détecter des positions (12e) du réglage (13e) du levier de vitesses et les moyens d'évaluation (32) sont conçus, dans le cas où la position (12e) du réglage (13e) du levier de vitesses correspond au point mort, pour associer une situation de remorquage présumée (36) et, dans le cas contraire, une marche avant normale (48) au réglage (13e) du levier de vitesses.

14. Dispositif selon l'une des revendications 9 à 13,
**caractérisé en ce qu'**un paramètre de véhicule (13) prédéfini est le régime moteur (13f) du véhicule automobile (38), les moyens de surveillance (30) sont conçus pour détecter des valeurs de régime moteur (12f) du régime moteur (13f) et les moyens d'évaluation (32) sont conçus, dans le cas où les valeurs de régime moteur (12f) sont égales ou inférieures à une valeur de seuil de régime moteur prédéfinie (16f), pour associer une situation de remorquage présumée (36) et, dans le cas contraire, une marche avant normale (48) au régime moteur (13f).

15. Dispositif selon l'une quelconque des revendications 9 à 14,
**caractérisé en ce qu'**un paramètre de véhicule (13) prédéfini est le réglage (13g) du système d'avertissement de danger du véhicule automobile, les moyens de surveillance (30) sont conçus pour détecter l'activation ou la désactivation (12g) du réglage (13g) du système d'avertissement de danger et les moyens d'évaluation (32) sont conçus, dans le cas où le réglage (13g) du système d'avertissement de danger est activé, pour associer une situation de remorquage présumée (36) et, dans le cas contraire, une marche avant normale (48) au réglage (13g) du système d'avertissement de danger.

16. Dispositif selon l'une quelconque des revendications 9 à 15,
**caractérisé en ce qu'**un paramètre de véhicule (13) prédéfini est la détection d'objet (13h) pour des objets situés à l'avant du véhicule automobile (38), les moyens de surveillance (30) sont conçus pour détecter des durées (12h) pendant lesquelles le même véhicule automobile roule vers l'avant et les moyens d'évaluation (32) sont conçus, dans le cas où la durée (12h) dépasse un seuil de durée (16g) prédéfini, pour associer une situation de remorquage présumée (36) et, dans le cas contraire, une marche avant normale (48) à la détection d'objet (13h).

17. Véhicule (38), en particulier véhicule utilitaire, comportant un dispositif selon l'une des revendications 9 à 16 pour mettre en œuvre un procédé selon l'une des revendications 1 à 8.
